# EUROPÄISCHE PATENTANMELDUNG

(11) **EP 4 209 657 A1**
(43) Veröffentlichungstag der Anmeldung: **12.07.2023**
(21) Anmeldenummer: 23150374.9
(22) Anmeldetag: 05.01.2023
(51) Int. Cl.: F01D 5/14, F01D 9/02

(54) **SCHAUFEL, INSBESONDERE LAUFSCHAUFEL ODER LEITSCHAUFEL, MIT ASYMMETRISCHEM VORDERKANTENPROFIL FÜR EINE GASTURBINE**

(30) Priorität: 07.01.2022 DE 102022100315
(71) Anmelder: MTU Aero Engines AG, 80995 München (DE)
(72) Erfinder: Hiller, Sven-Jürgen, 80995 München (DE)

(57) **Zusammenfassung**

Beschrieben wird eine Schaufel (40), insbesondere Laufschaufel (40) oder Leitschaufel, für eine Gasturbine, insbesondere Fluggasturbine, mit einer Vorderkante (42), einer Hinterkante (44), einer Druckseite (46) und einer Saugseite, die sich zwischen der Vorderkante (42) und der Hinterkante (44) erstrecken, wobei die Schaufel (40) entlang der Vorderkante (42) ein Vorderkantenprofil (48) mit mehreren Profilabschnitten (50) aufweist, wobei jeder Profilabschnitt (50) entlang seiner Profilabschnittslänge (PL) ausgehend von einer Vertiefung (52) über einen ersten Übergangsabschnitt (A1) in eine Erhebung (54) und über einen zweiten Übergangsabschnitt (A2) wieder in eine nächste Vertiefung (52) übergeht. Dabei ist vorgesehen, dass ein Scheitelpunkt (SP) der Erhebung (54) von jedem Profilabschnitt (50) bezogen auf die jeweilige Profilabschnittslänge (PL) asymmetrisch angeordnet ist, derart dass der erste Übergangsabschnitt (A1) eine erste Übergangslänge (L1) und der zweiten Übergangsabschnitt (A2) eine zweite Übergangslänge (L2) aufweisen, wobei die erste Übergangslänge (L1) und die zweite Übergangslänge (L2) unterschiedlich lang sind.

## Beschreibung

Die vorliegende Erfindung betrifft eine Schaufel, insbesondere Laufschaufel oder Leitschaufel, für eine Gasturbine, insbesondere Fluggasturbine, mit einer Vorderkante, einer Hinterkante, einer Druckseite und einer Saugseite, die sich zwischen der Vorderkante und der Hinterkante erstrecken, wobei die Schaufel entlang der Vorderkante ein Vorderkantenprofil mit mehreren Profilabschnitten aufweist, wobei jeder Profilabschnitt entlang seiner Profilabschnittslänge ausgehend von einer Vertiefung über einen ersten Übergangsabschnitt in eine Erhebung und über einen zweiten Übergangsabschnitt wieder in eine nächste Vertiefung übergeht.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt. Insbesondere können solche Richtungsangaben in Bezug auf die Laufschaufel dahingehend verstanden werden, dass die Laufschaufel in Bezug auf ihren montierten Zustand in einer Gasturbine beschrieben wird.

Aus dem Stand der Technik sind verschiedene gewellte Vorderkantenprofile bekannt, bei denen die Profilabschnitte symmetrisch zu einem Anströmwinkel ausgebildet sind. Es wird beispielsweise verwiesen auf die US 10,113,431 B2 oder auf die US 2013/0056585 A1. Ferner sind auch Fachartikel zu solchen Vorderkantenprofilen bekannt, wie beispielsweise GT2021-58798 S. Sidhu et al.; Performace evaluation of leading edge tubercles applied to the blades in a 2-d compressor cascade oder
GT2021-58747 C. Cuciumitam et al.; Structural integrity of serrated leading edge guide vane blades for noise reduction.

Die im Stand der Technik aufgefundenen symmetrischen Vorderkantenprofile weisen den Nachteil auf, dass stromabwärts von dem gewellten, symmetrischen Vorderkantenprofil zwei gegendrehende Wirbel generiert werden, die miteinander eine starke Wechselwirkung haben und aufgrund dissipativer Effekte schnell abklingen. Entlang der Profilerstreckung (Span) werden abwechselnd Bereiche generiert, die durch eine Strömung senkrecht zur Profiloberfläche hin und daneben eine Strömung weg von der Profiloberfläche beschrieben werden kann. Derartige Strömungsstrukturen sind allerdings nachteilig für eine Stabilisierung einer ablösenahe Grenzschicht.

Die der Erfindung zu Grunde liegende Aufgabe wird darin gesehen, eine Schaufel anzugeben, bei der nachteilige Strömungsstrukturen vermieden werden können.

Zur Lösung dieser Aufgabe werden eine Schaufel, ein Schaufelkranz und eine Gastrubine mit den Merkmalen der jeweiligen unabhängigen Patentansprüche vorgeschlagen. Vorteilhafte optionale Ausgestaltungen sind in den abhängigen Patentansprüchen enthalten.

Vorgeschlagen wird also eine Schaufel, insbesondere Laufschaufel oder Leitschaufel, für eine Gasturbine, insbesondere Fluggasturbine, mit einer Vorderkante, einer Hinterkante, einer Druckseite und einer Saugseite, die sich zwischen der Vorderkante und der Hinterkante erstrecken, wobei die Schaufel entlang der Vorderkante ein Vorderkantenprofil mit mehreren Profilabschnitten aufweist, wobei jeder Profilabschnitt entlang seiner Profilabschnittslänge ausgehend von einer Vertiefung über einen ersten Übergangsabschnitt in eine Erhebung und über einen zweiten Übergangsabschnitt wieder in eine nächste Vertiefung übergeht. Dabei ist vorgesehen, dass ein Scheitelpunkt der Erhebung von jedem Profilabschnitt bezogen auf die jeweilige Profilabschnittslänge asymmetrisch angeordnet ist, derart dass der erste Übergangsabschnitt eine erste Übergangslänge und der zweiten Übergangsabschnitt eine zweite Übergangslänge aufweisen, wobei die erste Übergangslänge und die zweite Übergangslänge unterschiedlich lang sind.

Mittels einer solchen asymmetrischen Profilierung werden stromabwärts von der Vorderkante ungleichgroße Wirbel erzeugt, üblicherweise ein größerer Wirbel und kleiner, gegendrehender Wirbel. Durch die unterschiedliche Größe der ausgebildeten Wirbel sind dissipative Vorgänge geringer ausgeprägt und die aerodynamische Wirkung des größeren Wirbels ist weiter stromabwärts vorhanden. Der durch die asymmetrische Profilgestaltung erzeugt größere Wirbel zeigt auch eine bessere grenzstabilisierende Wirkung.

Bei der Schaufel können bezogen auf eine Radialrichtung der Schaufel, insbesondere ausgehend von einem Schaufelfuß zu einer Schaufelspitze, die Profilabschnitte derart ausgebildet sind, dass jeweils die erste Übergangslänge kürzer ist als die zweite Übergangslänge. Es wird allgemein darauf hingewiesen, die Abfolge von erster und zweiter Übergangslänge nicht zwingend von radial innen nach radial außen vorliegen muss. Vielmehr kann die asymmetrische Profilierung auch umgekehrt ausgeführt sein, so dass die Abfolge von erster und zweiter Übergangslänge von radial außen nach radial innen vorgesehen ist.

Bei der Schaufel kann eine Steigung des ersten Übergangsabschnitts größer sein als eine Steigung des zweiten Übergangsabschnitts.

Bei der Schaufel kann die erste Übergangslänge etwa 10% bis 40% der Profilabschnittslänge betragen und die zweite Übergangslänge kann etwa 60% bis 90% der Profilabschnittslänge betragen.

Bei der Schaufel können der erste Übergangsabschnitt und der zweite Übergangsabschnitt im Wesentlichen geradlinig oder mit einem jeweiligen, im Wesentlichen gleichbleibenden Krümmungsradius ausgebildet sein. Insbesondere können die Übergangsabschnitte so ausgebildet sein, dass in deren Verlauf keine Änderung einer Krümmung von konkav nach konvex oder umgekehrt vorliegt.

Ein Schaufelkranz, insbesondere Laufschaufelkranz oder Leitschaufelkranz, für eine Gastrubine, insbesondere Fluggasturbine, kann mit mehreren in Umfangsrichtung benachbart zueinander angeordneten Schaufeln, wie sie oben beschrieben sind, ausgeführt sein.

Eine Gasturbine, insbesondere Fluggasturbine, kann mit wenigstens einem verdichterseitigen Schaufelkranz oder/und wenigstens einem turbinenseitigen Schaufelkranz ausgeführt sein, wobei an dem verdichterseitigen Schaufelkranz oder/und an dem turbinenseitigen Schaufelkranz in Umfangsrichtung mehrere oben beschriebene Schaufeln angeordnet sind.

Nachfolgend wird die Erfindung unter Bezugnahme auf die anliegenden Figuren beispielhaft und nicht einschränkend beschrieben.
Fig. 1 zeigt in einer vereinfachten schematischen Darstellung ein Prinzipbild einer Fluggasturbine.
Fig. 2 zeigt in einer vereinfachten schematischen Darstellung eine Laufschaufel mit Vorderkantenprofil.

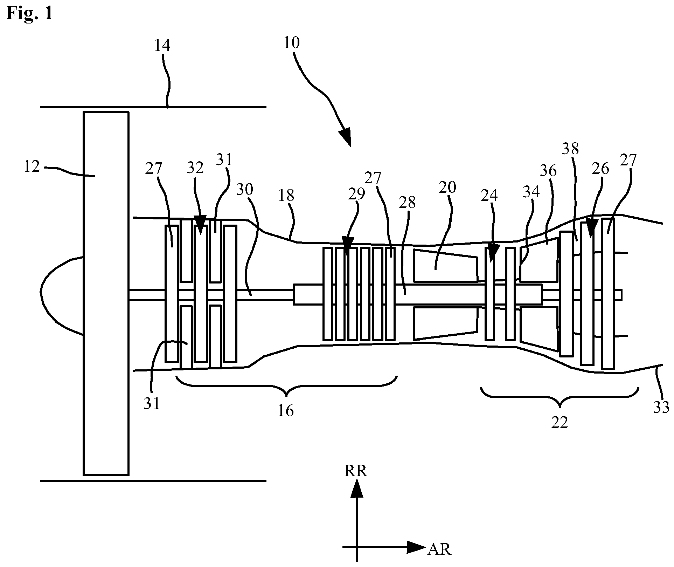

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem Niederdruckverdichter 32, so dass diese gemeinsam angetrieben bzw. gedreht werden. An die Turbine 22 schließt sich eine hier nur angedeutete Schubdüse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 28, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Die nachfolgende Beschreibung einer Ausführungsform der Erfindung bezieht sich insbesondere auf eine bzw. mehrere Schaufeln, insbesondere Laufschaufeln oder Leitschuafeln, die verdichterseitig oder turbinenseitig in der Fluggasturbine 10 angeordnet sein können.

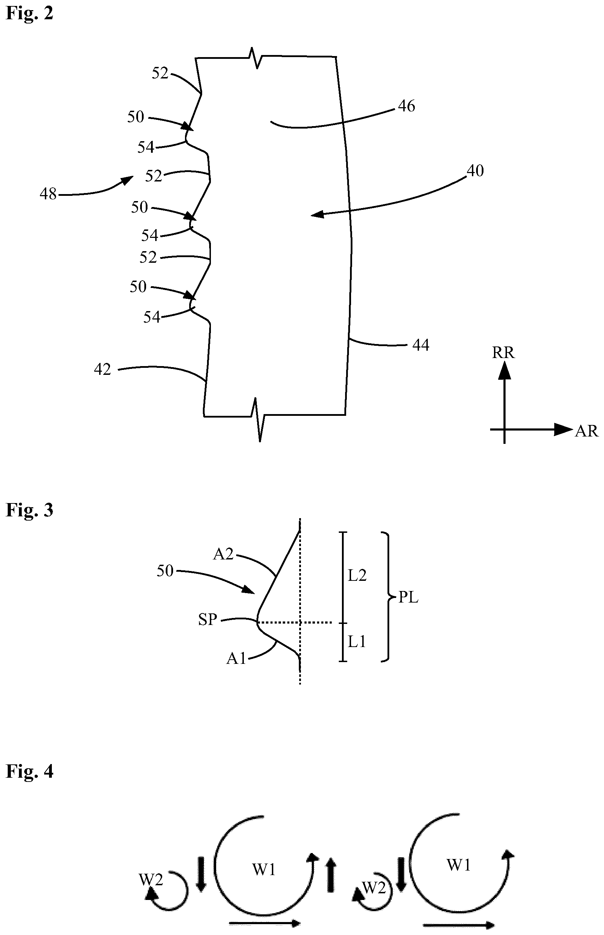

Fig. 2 zeigt vereinfacht und schematisch eine Teilansicht einer Laufschaufel 40 als Beispiel für eine Schaufel einer Gasturbine. Die Laufschaufel 40 weist eine Vorderkante 42 und eine Hinterkante 44 auf. In üblicher Weise umfasst die Laufschaufel 40 eine Druckseite 46 und eine in der Fig. nicht sichtbare Saugseite, die sich zwischen der Vorderkante 42 und der Hinterkante 44 erstrecken.

Die Laufschaufel 40 weist entlang der Vorderkante 40 ein Vorderkantenprofil 48 mit mehreren Profilabschnitten 50 auf, wobei jeder Profilabschnitt 50 entlang seiner Profilabschnittslänge PL ausgehend von einer Vertiefung 52 über einen ersten Übergangsabschnitt A1 in eine Erhebung 54 und über einen zweiten Übergangsabschnitt A2 wieder in eine nächste Vertiefung 52 übergeht.

Die Ausgestaltung des Vorderkantenprofils 48, insbesondere ein Beispiel eines Profilabschnitts 50, ist aus der etwas vergrößerten Darstellung der Fig. 3 noch besser ersichtlich.

Ein Scheitelpunkt SP der Erhebung 54 von jedem Profilabschnitt 50 ist bezogen auf die jeweilige Profilabschnittslänge PL asymmetrisch angeordnet. Somit weist der erste Übergangsabschnitt A1 eine erste Übergangslänge L1 und der zweiten Übergangsabschnitt A2 eine zweite Übergangslänge L2 auf, wobei die erste Übergangslänge L1 und die zweite Übergangslänge L2 unterschiedlich lang sind.

Bezogen auf eine Radialrichtung RR der Laufschaufel 40, insbesondere ausgehend von einem Schaufelfuß zu einer Schaufelspitze, können die die Profilabschnitte 50 derart ausgebildet, dass jeweils die erste Übergangslänge L1 kürzer ist als die zweite Übergangslänge L2. Es wird darauf hingewiesen, dass die Abfolge von erster und zweiter Übergangslänge L1, L2 nicht zwingend von radial innen nach radial außen vorliegen muss. Vielmehr kann die asymmetrische Profilierung 48 auch umgekehrt ausgeführt sein, so dass die Abfolge von erster und zweiter Übergangslänge L1, L2 von radial außen nach radial innen vorgesehen ist.

Aus der Fig. 3 ist ferner ersichtlich, dass eine bzw. die Steigung des ersten Übergangsabschnitts A1 größer ist als eine bzw. die Steigung des zweiten Übergangsabschnitts A2.

Bei einer Laufschaufel 40 kann die erste Übergangslänge L1 etwa 10% bis 40% der Profilabschnittslänge PL betragen, und die zweite Übergangslänge L2 kann etwa 60% bis 90% der Profilabschnittslänge betragen.

Der erste Übergangsabschnitt A1 und der zweite Übergangsabschnitt A2 können im Wesentlichen geradlinig oder mit einem jeweiligen, im Wesentlichen gleichbleibenden Krümmungsradius ausgebildet sein. Mit anderen Worten sind die Übergangsabschnitte A1, A2 so ausgebildet, dass sie zwischen der jeweiligen Vertiefung und Erhebung im Wesentlichen unverändert, also ohne Krümmungsänderung o.ä. ausgeführt sind.

Mittels einer oben beschriebenen asymmetrischen Profilierung 48 werden stromabwärts von der Vorderkante 42 ungleichgroße Wirbel W1, W2 erzeugt, üblicherweise ein größerer Wirbel W1 und kleiner, gegendrehender Wirbel W2, was vereinfacht in Fig. 4 illustriert ist. Durch die unterschiedliche Größe der ausgebildeten Wirbel sind dissipative Vorgänge geringer ausgeprägt und die aerodynamische Wirkung des größeren Wirbels W1 ist weiter stromabwärts vorhanden. Der durch die asymmetrische Profilgestaltung erzeugte größere Wirbel W1 zeigt auch eine bessere grenzstabilisierende Wirkung.

Die Dimensionierung des Vorderkantenprofils 48 bzw. der verschiedenen Profilabschnitte 50, wie beispielsweise Höhe des Scheitelpunkt (maximale Erstreckung entgegen der Anströmung), Verhältnis der Abmessungen von L1 und L2, Krümmungsradien der Übergangsabschnitte A1, A2 kann auf der Basis von aerodynamischen und geometrischen Größen, wie etwa Machzahl (subsonisch, transsonisch), Reynoldszahlbereich, Verhältnis Profildicke zu Profillänge, Krümmungsverlauf der Saug- und Druckseite und der Profilsehen erfolgen.

Was unter Bezugnahme auf die Fig. 2 und 3 am Beispiel der Laufschaufel 40 beschrieben worden ist, kann in gleicher bzw. analoger Weise auch für eine hier nicht weiter beschriebene Leitschaufel umgesetzt werden. Mit anderen Worten kann eine oben beschriebene asymmetrische Profilierung 48 sowohl an Laufschaufeln, als auch an Leitschaufeln einer Gasturbine, insbesondere Fluggasturbine eingesetzt werden.

### Bezugszeichenliste

- 10: Fluggasturbine
- 12: Fan
- 14: Mantel
- 16: Verdichter
- 18: inneres Gehäuse
- 20: Brennkammer
- 22: Turbine
- 24: Hochdruckturbine
- 26: Niederdruckturbine
- 27: Laufschuafelkranz
- 28: Hohlwelle
- 29: Hochdruckverdichter
- 30: Welle
- 31: Leitschaufelkranz
- 32: Niederdruckverdichter
- 33: Schubdüse
- 34: Turbinenzwischengehäuse
- 36: radial äußerer Bereich
- 38: Ringraum
- 40: Laufschaufel
- 42: Vorderkante
- 44: Hinterkante
- 46: Druckseite
- 48: Vorderkantenprofil
- 50: Profilabschnitt
- 52: Vertiefung
- 54: Erhebung
- A1, A2: Übergangsabschnitt
- L1, L2: Übergangslänge
- PL: Profilabschnittslänge
- SP: Scheitelpunkt
- W1, W2: Wirbel
- AR: Axialrichtung
- RR: Radialrichtung

## Patentansprüche

1. Schaufel (40), insbesondere Laufschaufel (40) oder Leitschaufel, für eine Gasturbine, insbesondere Fluggasturbine, mit
einer Vorderkante (42),
einer Hinterkante (44),
einer Druckseite (46) und einer Saugseite, die sich zwischen der Vorderkante (42) und der Hinterkante (44) erstrecken,
wobei die Schaufel (40) entlang der Vorderkante (42) ein Vorderkantenprofil (48) mit mehreren Profilabschnitten (50) aufweist, wobei jeder Profilabschnitt (50) entlang seiner Profilabschnittslänge (PL) ausgehend von einer Vertiefung (52) über einen ersten Übergangsabschnitt (A1) in eine Erhebung (54) und über einen zweiten Übergangsabschnitt (A2) wieder in eine nächste Vertiefung (52) übergeht,
**dadurch gekennzeichnet, dass**
ein Scheitelpunkt (SP) der Erhebung (54) von jedem Profilabschnitt (50) bezogen auf die jeweilige Profilabschnittslänge (PL) asymmetrisch angeordnet ist, derart dass der erste Übergangsabschnitt (A1) eine erste Übergangslänge (L1) und der zweiten Übergangsabschnitt (A2) eine zweite Übergangslänge (L2) aufweisen, wobei die erste Übergangslänge (L1) und die zweite Übergangslänge (L2) unterschiedlich lang sind.

2. Schaufel (40) nach Anspruch 1, **dadurch gekennzeichnet, dass** bezogen auf eine Radialrichtung (RR) der Schaufel (40), insbesondere ausgehend von einem Schaufelfuß zu einer Schaufelspitze, die Profilabschnitte (50) derart ausgebildet sind, dass jeweils die erste Übergangslänge (L1) kürzer ist als die zweite Übergangslänge (L2).

3. Schaufel (40) nach Anspruch 1 oder 2, **dadurch gekennzeichnet, dass** eine Steigung des ersten Übergangsabschnitts (A1) größer ist als eine Steigung des zweiten Übergangsabschnitts (A2).

4. Schaufel (40) nach einem der vorhergehenden Ansprüche, **dadurch gekennzeichnet, dass** die erste Übergangslänge (L1) etwa 10% bis 40% der Profilabschnittslänge (PL) beträgt und die zweite Übergangslänge (L2) etwa 60% bis 90% der Profilabschnittslänge (PL) beträgt.

5. Schaufel (40) nach einem der vorhergehenden Ansprüche, wobei der erste Übergangsabschnitt (A1) und der zweite Übergangsabschnitt (A2) im Wesentlichen geradlinig oder mit einem jeweiligen, im Wesentlichen gleichbleibenden Krümmungsradius ausgebildet sind.

6. Schaufelkranz (27), insbesondere Laufschaufelkranz (27) oder Leitschaufelkranz, für eine Gastrubine, insbesondere Fluggasturbine (10), mit mehreren in Umfangsrichtung benachbart zueinander angeordneten Schaufeln (40) gemäß einem der vorhergehenden Ansprüche.

7. Gasturbine, insbesondere Fluggasturbine (10), mit wenigstens einem verdichterseitigen Schaufelkranz oder/und wenigstens einem turbinenseitigen Schaufelkranz, wobei an dem verdichterseitigen Schaufelkranz oder/und an dem turbinenseitigen Schaufelkranz in Umfangsrichtung mehrere Schaufeln (40) gemäß einem der Ansprüche 1 bis 5 angeordnet sind.
